# FASCICULE DE BREVET EUROPEEN

(11) **EP 2 372 187 B1**
(45) Date de publication et mention de la délivrance du brevet: **03.10.2012**
(21) Numéro de dépôt: 11158393.6
(22) Date de dépôt: 16.03.2011
(51) Int. Cl.: F16H 1/28

(54) **Réducteur et actionneur électrique comprenant un tel réducteur**
Reduktionsgetriebe und elektrisches Stellglied mit so einem Reduktionsgetriebe
Reduction gearing and electric actuator with such a reduction gearing

(30) Priorité: 19.03.2010 FR 1052003
(43) Date de publication de la demande: 05.10.2011
(73) Titulaire: Somfy SAS, 74300 Cluses (FR)
(72) Inventeur: Pezet, Jérôme, 74370, VILLAZ (FR)
(74) Mandataire: Myon, Gérard Jean-Pierre

(56) Documents cités:
- EP-A2- 0 863 331
- FR-A1- 2 742 834
- US-A- 5 366 423
- US-A1- 2006 247 089

## Description

### Domaine technique :

L'invention concerne un réducteur d'un actionneur électrique pour la manoeuvre d'un écran domotique. L'invention concerne également un actionneur tubulaire électrique de manoeuvre d'un écran domotique, qui comprend un tel réducteur.

### Etat de la technique :

Les écrans domotiques sont généralement manoeuvrés par des actionneurs tubulaires électriques. Ceux-ci comprennent un moteur électrique monté à l'intérieur d'un tube. Ce moteur électrique entraîne en rotation un arbre moteur à une vitesse relativement élevée, de l'ordre de 2 800 tours/min (en Europe). Aussi, pour obtenir une vitesse de rotation et un couple exploitable en sortie d'actionneur, on adjoint un réducteur au moteur. Ce réducteur comprend souvent trois étages de réduction.

Selon une conception courante, le premier étage du réducteur est composé d'un solaire, couplé à l'arbre de sortie du moteur électrique, engrenant avec trois satellites logés dans un barillet et situés au même niveau axial et radial. Les satellites tournent chacun autour d'un arbre solidaire du barillet. Chaque satellite est disposé à 120° des deux autres. Chaque satellite engrène avec une même couronne fixe, de sorte à provoquer la rotation du barillet autour de son axe de révolution. Le barillet comprend une interface de sortie de l'étage. Cette interface peut être le solaire de l'étage suivant.

La majorité des fabricants d'actionneur cherche à réduire le bruit généré par ce sous-ensemble. Une source de bruit provient des éléments en mouvement. En conséquence, il s'avère avantageux, d'un point de vue sonore, d'améliorer le positionnement des éléments mobiles les uns par rapport aux autres et plus particulièrement, les pièces du premier étage, puisqu'elles tournent le plus vite.

Le brevet EP-A-0 863 331 illustre une conception où l'arbre moteur est guidé par un coussinet inséré au centre d'un carter. L'extrémité de l'arbre moteur est reliée au solaire du premier étage de réduction par un accouplement. D'autre part, le carter comporte un alésage permettant de centrer le barillet. Par ailleurs, le solaire est centré par un téton, prolongeant le solaire, logé dans une pièce rapportée sur le barillet. Pour diminuer le bruit, le jeu d'engrènement doit être réduit, ce qui implique un bon positionnement entre le solaire et les satellites. Or, comme les satellites sont directement positionnés par rapport au barillet, il est important que le solaire soit également bien positionné par rapport au barillet. Dans le cas illustré par ce brevet, le solaire est bien centré à une première extrémité, grâce au téton en bout du pignon. Par contre, le centrage de la seconde extrémité du solaire par rapport au barillet est moins direct. En effet, le solaire est relié à la pièce d'accouplement qui coopère avec l'arbre moteur, celui-ci étant guidé par le coussinet fixé au carter qui, enfin, centre le barillet. Le débattement de la seconde extrémité peut ainsi être suffisamment important pour perturber l'engrènement et générer du bruit.

### Exposé de l'invention :

L'invention propose un réducteur pour actionneur électromécanique comprenant un étage de réduction comprenant un solaire engrenant avec au moins un satellite logé dans un barillet. Ce satellite tourne autour d'un arbre solidaire du barillet et engrène avec une couronne fixe pour entraîner en rotation le barillet autour d'un axe de rotation. Le solaire et le barillet sont guidés en rotation, autour de l'axe de rotation, par un même moyen de guidage.

L'utilisation d'un même moyen de guidage permet d'améliorer le positionnement du solaire par rapport au barillet et, en conséquence, celui du solaire par rapport au satellite. L'agencement de ces pièces est régulier ce qui réduit le niveau sonore généré par l'actionneur.

Le positionnement du solaire par rapport au barillet est direct car le solaire est guidé en rotation par deux moyens de guidage en contact avec le barillet. L'arbre supportant le satellite est fixé sur le barillet à chaque extrémité ce qui assure une position stable de l'arbre dans le barillet. Le jeu d'engrènement est ainsi maîtrisé.

Le moyen de guidage peut être solidaire du barillet. Il est alors en contact avec le solaire mais est également logé, en partie, dans un emplacement d'un carter fixe. Dans ce cas, le solaire est mobile par rapport au moyen de guidage et le sous-ensemble formé du barillet et du moyen de guidage est mobile par rapport au carter fixe. Le moyen de guidage assure ainsi la fonction de guidage en rotation du solaire et du barillet autour de leur axe de révolution.

Alternativement, le moyen de guidage peut être solidaire d'un carter fixe. Il est alors en contact avec le solaire et le barillet afin de guider les pièces en rotation. Dans ce cas, le solaire et le barillet sont mobiles par rapport au moyen de guidage.

Ces deux modes de réalisations permettent de créer un sous-ensemble compact facilitant l'assemblage du réducteur. Ce sous-ensemble peut comprendre le barillet équipé de ses satellites, le solaire inséré à l'intérieur, le moyen de guidage, une pièce d'accouplement à un arbre moteur et, selon le mode de réalisation, un carter.

Pour diminuer l'encombrement du sous-ensemble, plusieurs aménagements peuvent être envisagés :
- le premier moyen de guidage comprend un alésage permettant de guider en rotation le solaire et au moins une partie radiale externe permettant de guider en rotation le barillet
- une partie des moyens de guidage du solaire est disposée à l'intérieur du barillet.
- le moyen de guidage comprend une partie chevauchant axialement le barillet et une partie débordant axialement du barillet.
- le diamètre externe maximal du moyen de guidage est inférieur au diamètre externe maximal du barillet

Cette invention est particulièrement adaptée pour un train planétaire simple de type II.

L'invention concerne également un actionneur tubulaire électrique de manoeuvre d'un écran domotique, cet actionneur intégrant un réducteur tel que mentionné ci-dessus.

### Description des dessins :

L'invention sera mieux comprise à la lecture de la description qui va suivre, donnée uniquement à titre d'exemple et faite en se référant aux dessins annexés sur lesquels :
- la figure 1 est une illustration schématique de l'architecture d'un actionneur tubulaire ;
- la figure 2 est une coupe partielle d'un actionneur tubulaire illustrant un étage de réduction selon l'invention, elle correspond à la partie A de la figure 1 ;
- la figure 3 est une vue, à plus grande échelle, du détail B de la figure 2 ;
- la figure 4 est une vue en perspective d'un barillet équipé selon l'invention.

### Description des modes de réalisation :

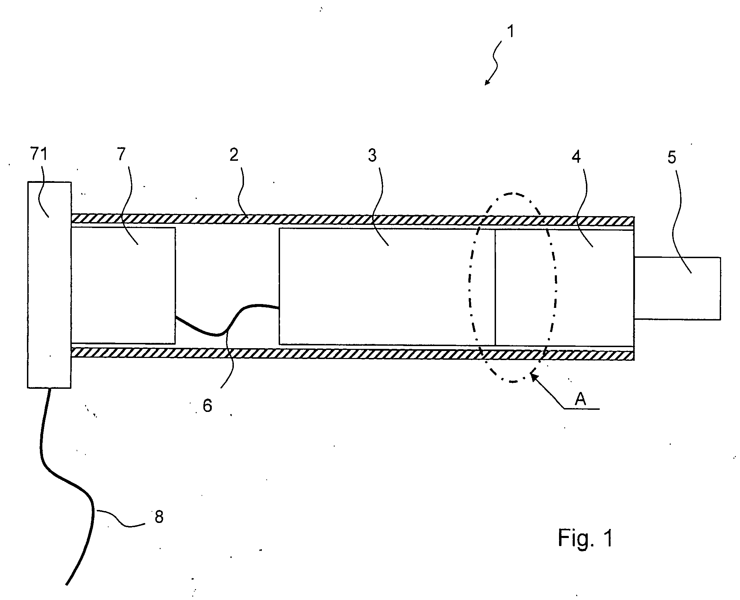

La figure 1 représente schématiquement un actionneur tubulaire 1 composé d'un tube 2 à l'intérieur duquel est logé un moteur électrique 3. Cet actionneur est destiné à la manoeuvre d'un écran domotique, tel qu'un store (extérieur ou intérieur), un volet roulant, un écran de vidéoprojection ou une grille de fermeture. Le moteur électrique 3 est couplé à un réducteur 4, de manière à ce que l'arbre de sortie 5 du réducteur tourne à une vitesse souhaitée. Le réducteur 4 comprend un train planétaire simple de type II. L'arbre de sortie 5 du réducteur correspond à l'arbre de sortie de l'actionneur. Il entraîne une roue solidaire d'un tube d'enroulement dans lequel est inséré l'actionneur et autour duquel s'enroule l'écran motorisé, ces éléments n'étant pas représentés. Le moteur 3 est par ailleurs alimenté par un câble électrique 6 relié à un module de contrôle 7. Qu'il soit mécanique ou électronique, le module de contrôle 7 permet de couper l'alimentation du moteur lorsque l'écran atteint une position particulière et/ou reçoit un ordre d'un point de commande. Le module de contrôle 7 comprend une interface 71 destiné à permettre la fixation de l'actionneur 1 sur un support fixé sur un bâti. Le module de contrôle est alimenté par un câble secteur 8.

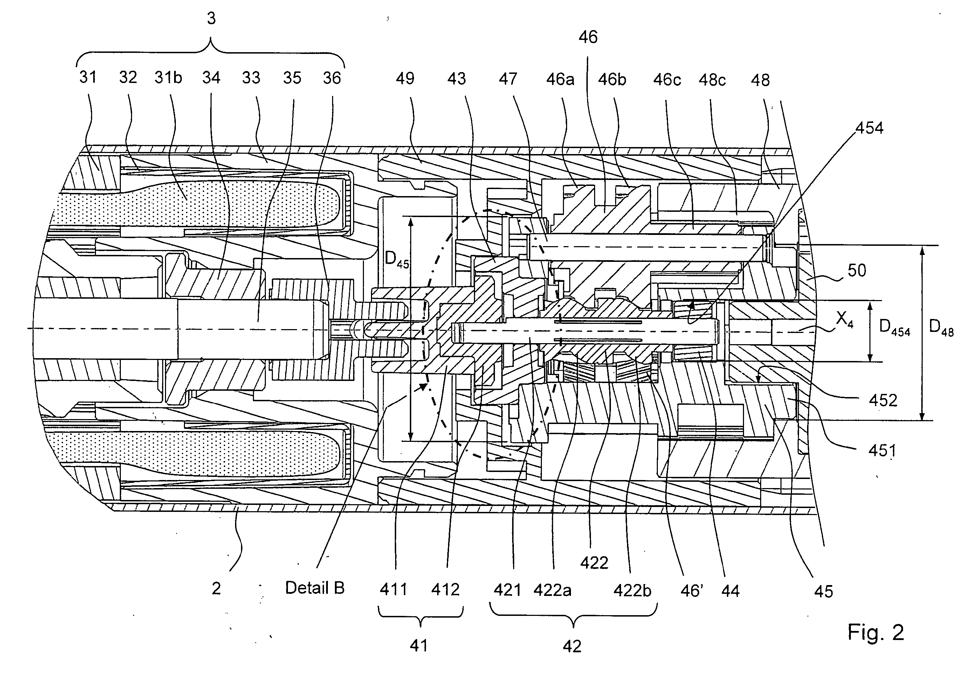

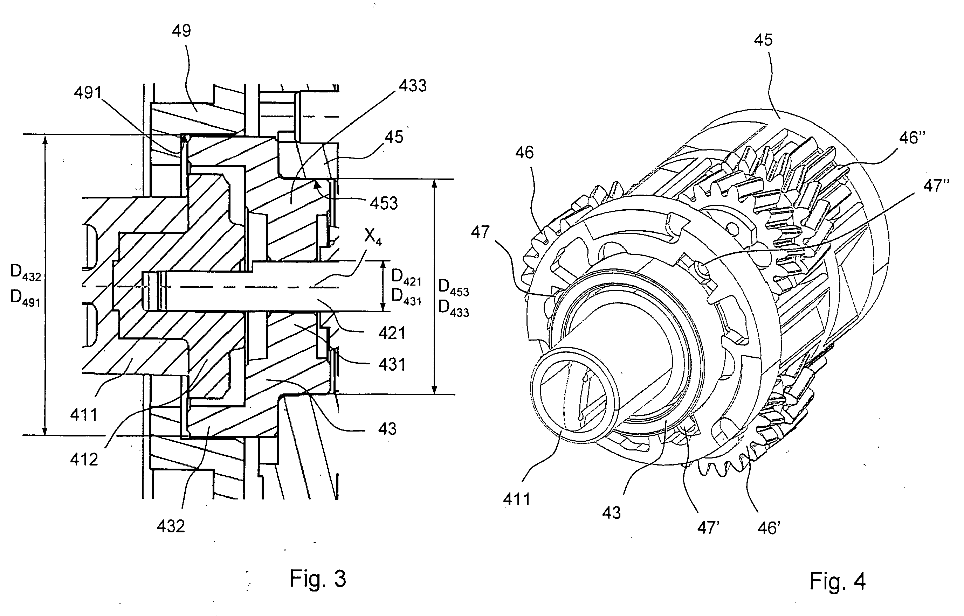

Les figures 2 à 4 représentent le premier étage du réducteur 4 de l'actionneur tubulaire 1. Le moteur 3, inséré à l'intérieur du tube 2, comprend un stator bobiné 31 dont le chignon 31 b du bobinage est logé à l'intérieur d'un carter torique 32. Ce carter torique 32 s'insère dans un bol 33 intégrant un coussinet auto-lubrifiant 34 guidant en rotation l'arbre moteur 35. L'arbre moteur 35 est solidaire du rotor du moteur. Il est entraîné en rotation par le stator bobiné 31. Une première pièce interface 36 est fixée à une extrémité de l'arbre moteur 35. Elle coopère avec une deuxième pièce interface 41, fixée sur le solaire 42 du premier étage du réducteur 4. Ces deux pièces d'interface 36 et 41 forment un accouplement entre le moteur 3 et le réducteur 4.

Avantageusement, la deuxième pièce interface 41 est bi-matière. Une première partie 411 est en matière amortissante, par exemple en élastomère. Cette partie coopère avec la première pièce interface et permet de réduire le bruit. La deuxième partie 412 est en matière plus rigide que la première partie, par exemple en métal. Cette partie coopère avec le solaire 42 et permet de transmettre le couple au réducteur.

Le solaire 42 comporte un arbre 421 et un pignon 422 monté serrant sur l'arbre 421. Le pignon 422 comprend deux dentures hélicoïdales 422a, 422b. Le solaire 42 est entraîné en rotation par la deuxième pièce interface 41 monté serrant sur une première extrémité de l'arbre 421. Il est guidé en rotation par deux coussinets auto-lubrifiants 43, 44. Ces coussinets sont montés serrant sur un barillet 45, respectivement dans des alésages 453 et 454 dont on note D₄₅₃ et D₄₅₄ les diamètres. Le premier coussinet 43 assure le guidage de l'arbre 421 vis à vis du barillet 45 et est positionné entre la pièce interface 41 et le pignon 422. Le premier coussinet 43 est solidaire du barillet 45. Le deuxième coussinet 44 assure également le guidage de la deuxième extrémité de l'arbre 421 vis à vis du barillet 45.

Le premier coussinet 43 comprend une partie radiale interne 431 qui entoure directement l'arbre 421 et qui est située radialement dans le barillet 45 et, le long de l'axe X₄, au niveau de ce barillet. L'arbre 421, dont on note D₄₂₁ le diamètre extérieur, est monté avec possibilité de rotation dans un alésage de la partie 431 du premier coussinet 43, dont on note D₄₃₁ le diamètre. La partie 431 chevauche axialement le barillet 45. Le coussinet 43 comprend également une partie radiale externe 432 qui déborde axialement du barillet 45, en direction du moteur 3, ce qui lui permet de coopérer avec l'alésage 491.

Le solaire 42 engrène avec trois satellites 46, 46' et 46". Chaque satellite est disposé à 120° par rapport aux deux autres. Chaque satellite tourne autour d'un arbre 47, 47' et 47" dont les extrémités sont montées sur le barillet 45. Chaque satellite comprend trois dentures 46a, 46b et 46c. Les deux premières dentures 46a et 46b sont hélicoïdales et engrènent avec les dentures hélicoïdales 422a, 422b du solaire. La troisième denture 46c est droite et engrène avec une denture intérieure 48c d'une couronne 48 fixe dans un carter 49. De cette manière, la rotation du solaire 422 entraîne la rotation du barillet 45 autour d'un axe commun X₄. Le barillet est guidé en rotation, d'un coté, vis à vis du de la couronne fixe 48, par une collerette 451 logée dans un alésage de la couronne fixe 48 dont on note D₄₈ le diamètre et, de l'autre coté, vis à vis du carter 49, par la partie radiale externe 432 du premier coussinet 43 qui coopère avec un alésage 491 du carter 49. On note D₄₃₂ le diamètre externe de la partie 432 et D₄₉₁ le diamètre interne de l'alésage 491 du carter 49, ces diamètres étant sensiblement égaux.

Le diamètre externe maximal du coussinet 43 est le diamètre D₄₃₂ de la partie 432. Il est inférieur au diamètre externe maximal D₄₅ du barillet 45.

Le barillet 45 comprend en outre un logement interface 452 destiné à accueillir une forme complémentaire d'une pièce 50 d'un frein, ou du solaire d'un étage de réduction suivant.

Ainsi conçu, l'assemblage de l'actionneur peut être simplifié du fait qu'un sous-ensemble compact peut être préparé préalablement. Le sous-ensemble compact comprend le barillet, équipé des satellites et des deux coussinets, le solaire, logé à l'intérieur du barillet et centré par rapport celui-ci grâce aux deux coussinets, et la deuxième pièce interface montée serrant sur l'extrémité du solaire. Ce sous-ensemble compact et solidaire est facile à manipuler.

L'avantage de cette solution est un bon guidage du solaire par rapport au barillet ce qui induit un bon positionnement du solaire par rapport aux satellites. De ce fait, l'engrènement entre les pignons est régulier, le jeu d'engrènement peut être réduit, tout comme le niveau sonore de l'actionneur.

Une solution alternative consiste à rendre solidaire le premier coussinet 43 du carter 49 au lieu qu'il soit solidaire du barillet 45. Dans ce cas, ce coussinet est fixe, contrairement au mode de réalisation précédent où il tourne conjointement avec le barillet. Le guidage en rotation ne se fait plus entre le premier coussinet 43 et le carter 49 mais entre le premier coussinet 43 et le barillet 45, entre la surface externe d'une partie 433 du premier coussinet, dont on note D₄₃₃ le diamètre, et l'alésage 453 du barillet 45. Avec ce mode de réalisation, le sous-ensemble compact proposé est différent. Il intègre, en plus, le carter 49.

Le premier coussinet 43 a une double fonction : Il sert, à la fois, à centrer le solaire 42 dans le barillet 45 et à centrer le barillet 45 dans le carter 49. Il est indépendant du carter 49, ce qui permet de le concevoir avec de petites dimensions et d'envisager ainsi de le fabriquer dans une matière favorisant le guidage en rotation, telle que du bronze auto-lubrifiant.

L'invention s'applique également à des barillets constituant d'autres types d'étages de réduction.

Le barillet n'est pas limité à l'utilisation de trois satellites. Il peut en supporter plus ou moins.

## Revendications

1. Réducteur (4) d'un actionneur électrique (1) pour la manoeuvre d'un écran domotique comportant un étage de réduction comprenant un solaire (42) engrenant avec au moins un satellite (46, 46', 46") tournant autour d'un arbre (47, 47', 47") et positionné dans un barillet (45), le satellite engrenant avec une couronne fixe (48) pour entraîner en rotation le barillet autour d'un axe de rotation (X₄), **caractérisé en ce qu'**il comprend un premier moyen de guidage (43) assurant à la fois le guidage en rotation du solaire (42) et le guidage en rotation du barillet (45) autour de l'axe de rotation (X₄).

2. Réducteur selon la revendication 1 **caractérisé en ce qu'**un deuxième moyen de guidage (44) assure également le guidage en rotation du solaire (42), le deuxième moyen de guidage étant logé dans le barillet (45).

3. Réducteur selon l'une des revendications précédentes **caractérisé en ce que** le premier moyen de guidage (43) est solidaire du barillet (45).

4. Réducteur selon l'une des revendications précédentes **caractérisé en ce que** le premier moyen de guidage (43) comprend un alésage (431) permettant de guider en rotation le solaire (42) et au moins une partie radiale externe (432, 433) permettant de guider en rotation le barillet (45).

5. Réducteur selon l'une des revendications précédentes **caractérisé en ce qu'**une partie des moyens de guidage (43, 44) du solaire est disposée à l'intérieur du barillet.

6. Réducteur selon l'une des revendications précédentes **caractérisé en ce que** le premier moyen de guidage (43) comprend une partie (431) chevauchant axialement le barillet (45) et une partie (432) débordant axialement du barillet.

7. Réducteur selon l'une des revendications précédentes **caractérisé en ce que** le diamètre externe maximal (D₄₃₂) du premier moyen de guidage (43) est inférieur au diamètre externe maximal (D₄₅) du barillet (45).

8. Réducteur selon l'une des revendications précédentes **caractérisé en ce que** le premier moyen de guidage est un coussinet (43).

9. Réducteur selon l'une des revendications précédentes **caractérisé en ce que** l'étage de réduction (4) est un train planétaire simple de type II.

10. Actionneur tubulaire électrique (3) de manoeuvre d'un écran domotique **caractérisé en ce qu'**il intègre un réducteur (4) selon l'une des revendications précédentes.

## Claims

1. A reduction gear (4) of an electric actuator (1) for driving a home screen, the reduction gear comprising a reduction stage having a sun gear (42) meshing with at least one planet gear (46, 46', 46") rotating about a respective shaft (47, 47', 47") and positioned in a drum (45), the planet gear meshing with a stationary ring (48) to drive the drum in rotation about an axis of rotation (X₄), **characterized in that** it further comprises first guide means (43) serving both to guide the sun gear (42) in rotation and to guide the drum (45) in rotation about the axis of rotation (X₄).

2. A reduction gear according to claim 1, **characterized in that** second guide means (44) serve likewise to guide the sun gear (42) in rotation, the second guide means being received in the drum (45).

3. A reduction gear according to any one of the preceding claims, **characterized in that** the first guide means (43) are secured to the drum (45).

4. A reduction gear according to any one of the preceding claims, **characterized in that** the first guide means (43) includes
both a bore (431), serving to guide the sun gear (42) in rotation, and at least a radially-outer portion (432, 433) serving to guide the drum (45) in rotation.

5. A reduction gear according to any one of the preceding claims, **characterized in that** a portion of the guide means (43, 44) for the sun gear is located inside the drum.

6. A reduction gear according to any one of the preceding claims, **characterized in that** the first guide means (43) includes both a portion (431) axially overlapping the drum (45) and a portion (432) projecting axially from the drum.

7. A reduction gear according to any one of the preceding claims, **characterized in that** the maximum outside diameter (D₄₃₂) of the first guide means (43) is less than the maximum outside diameter (D₄₅) of the drum (45).

8. A reduction gear according to any one of the preceding claims, **characterized in that** the first guide means is a bushing (43).

9. A reduction gear according to any one of the preceding claims, **characterized in that** the reduction stage (4) is a simple compound planetary gearset (type II).

10. An electric tubular actuator (3) for driving a home screen, the actuator being **characterized in that** it incorporates a reduction gear (4) according to any preceding claim.

## Patentansprüche

1. Reduktionsgetriebe (4) eines elektrischen Betätigungselements (1) für die Handhabung eines gebäudetechnischen Schirms, das eine Reduktionsstufe aufweist, die ein Sonnenrad (42) umfasst, das mit mindestens einem Planetenrad (46, 46', 46") im Eingriff ist, das um eine Welle (47, 47', 47") dreht und in einer Trommel (45) positioniert ist, wobei das Planetenrad mit einem Kranz (48) im Eingriff ist, um die Trommel um eine Drehachse (X₄) zur Drehung anzutreiben, **dadurch gekennzeichnet, dass** es ein erstes Führungsmittel (43) umfasst, das sowohl die Drehführung des Sonnenrades (42) als auch die Drehführung der Trommel (45) um die Drehachse (X₄) sicherstellt.

2. Reduktionsgetriebe nach Anspruch 1, **dadurch gekennzeichnet, dass** ein zweites Führungsmittel (44) gleichfalls die Drehführung des Sonnenrades (42) sicherstellt, wobei das zweite Führungsmittel in der Trommel (45) gelagert ist.

3. Reduktionsgetriebe nach einem der vorhergehenden Ansprüche,
**dadurch gekennzeichnet, dass** das erste Führungsmittel (43) fest mit der Trommel (45) verbunden ist.

4. Reduktionsgetriebe nach einem der vorhergehenden Ansprüche,
**dadurch gekennzeichnet, dass** das erste Führungsmittel (43) eine Bohrung (431), die gestattet, das Sonnenrad (42) in Drehung zu führen, und mindestens einen äußeren radialen Bereich (432, 433), der gestattet, die Trommel (45) in Drehung zu führen, umfasst.

5. Reduktionsgetriebe nach einem der vorhergehenden Ansprüche,
**dadurch gekennzeichnet, dass** ein Teil der Führungsmittel (43, 44) des Sonnenrades im Inneren der Trommel angeordnet ist.

6. Reduktionsgetriebe nach einem der vorhergehenden Ansprüche, **dadurch gekennzeichnet, dass** das erste Führungsmittel (43) einen Bereich (431), der axial die Trommel (45) überdeckt, und einen Bereich (432), der axial über die Trommel hinausgeht, umfasst.

7. Reduktionsgetriebe nach einem der vorhergehenden Ansprüche, **dadurch gekennzeichnet, dass** der maximale äußere Durchmesser (D₄₃₂) des ersten Führungsmittels (43) kleiner als der maximale äußere Durchmesser (D₄₅) der Trommel (45) ist.

8. Reduktionsgetriebe nach einem der vorhergehenden Ansprüche, **dadurch gekennzeichnet, dass** das erste Führungsmittel ein Achslager (43) ist.

9. Reduktionsgetriebe nach einem der vorhergehenden Ansprüche, **dadurch gekennzeichnet, dass** die Reduktionsstufe (4) ein einfaches Planetenzuggetrlebe Typ **II** ist.

10. Rohrförmiges elektrisches Betätigungselement (3) zur Handhabung eines gebäudetechnischen Schirms, **dadurch gekennzeichnet, dass** es ein Reduktionsgetriebe (4) nach einem der vorhergehenden Ansprüche einbezieht.
